# FASCICULE DE BREVET EUROPEEN

(11) **EP 1 851 940 B1**
(45) Date de publication et mention de la délivrance du brevet: **19.05.2010**
(21) Numéro de dépôt: 05798469.2
(22) Date de dépôt: 30.08.2005
(51) Int. Cl.: H04M 1/725, H04M 1/23

(54) **CLAVIER AUTOADHESIF DE COMMANDE A DISTANCE D'UN TELEPHONE CELLULAIRE PORTABLE**
SELBSTHAFTENDE FERNBEDIENUNGSTASTATUR FÜR EIN TRAGBARES MOBILTELEFON
SELF-ADHESIVE REMOTE-CONTROL KEYBOARD FOR A PORTABLE CELLULAR TELEPHONE

(30) Priorité: 16.09.2004 FR 0409842
(43) Date de publication de la demande: 07.11.2007
(73) Titulaire: Otmani, Mouhssine, 5035 EH Tilburg (NL)
(72) Inventeur: Gaucherot, Jacques, 50100 Cherbourg (FR)
(74) Mandataire: van Westenbrugge, Andries
(86) Numéro de dépôt international: PCT/FR2005/002168
(87) Numéro de publication internationale: WO 2006/032745

(56) Documents cités:
- EP-A- 0 685 954
- WO-A-97/42743
- WO-A-02/052819
- DE-U1- 29 618 043
- GB-A- 2 313 734
- US-A- 6 115 616

## Description

Clavier autoadhésif de téléphone cellulaire portable. La présente invention concerne un dispositif permettant d'effectuer à distance les actions nécessaires à l'émission ou à la réception d'une communication téléphonique au moyen d'un téléphone cellulaire portable équipé d'une interface d'émission/réception adaptée audit dispositif.

Compte tenu de l'état de la technique dans le domaine de la téléphonie, y compris pour ce qui concerne les commandes vocales, dans une grande majorité de cas, lorsque l'utilisateur d'un téléphone cellulaire portable réceptionne un appel ou lorsque, à son tour, il émet un appel, il lui est nécessaire d'actionner un certain nombre de touches sur le clavier dudit portable. Ces actions, anodines dans le quotidien, deviennent rapidement inconfortables lorsque l'utilisateur est ganté, qui plus est, s'il se trouve dans un environnement contraignant ou hostile. Une piste de ski, par exemple, n'est pas à proprement parler un environnement hostile pour l'utilisateur, toutefois les portables n'apprécient guère l'humidité, les chocs et le froid. L'utilisateur, lui, n'apprécie pas plus le fait de devoir retirer ses gros gants de ski ou ses moufles, d'ouvrir une poche ou une partie de son vestimentaire et d'avoir froid aux mains. Selon cet exemple, la réception d'un appel est fréquemment synonyme de contraintes, de manque de temps et d'inconfort. La miniaturisation des portables est appréciée au quotidien, toutefois, la situation ci-dessus, bien que marginale, en pâtit L'utilisateur d'un portable dans une station de ski recherche avant tout d'une ambiance de loisirs et non de contraintes, aussi, les dispositions techniques en vigueur manquent de confort. Par ailleurs, du fait de leurs dimensions réduites, les portables n'offrent pas une surface compatible avec l'inscription de messages à caractère publicitaire.

La demande de brevet US 6115616 décrit un clavier détachable pour un téléphone, qui est fourni sous la forme d'une carte de clavier insérée dans le kit pour les oreilles, cette carte étant complètement détachée du corps quand elle n'est pas insérée dans celui-ci. La communication sans fil entre le corps et le clavier du combiné est utilisé lorsque la carte n'est pas insérée dans le kit pour les oreilles, tandis que les contacts sont activés dans la position insérée de sorte que le téléphone sans fil fonctionne alors comme dans le cas d'un clavier non détachable.

La demande internationale de brevet WO 02/052819 A2 décrit une station mobile de communication, incluant une partie communication ayant un contrôleur, un émetteur-récepteur RF et une antenne, ainsi qu'une partie d'entrée pour l'information qui est présente sous forme d'un clavier ou un module de clavier qui peuvent être détachable de la partie communication. Le module de clavier est associé que ce soit attachée ou détachée, à travers une liaison sans fil à la partie communication pour transmettre des informations générées par le clavier, comme les numéros de téléphone composés, à l'aide du module de clavier vers la partie communication. La liaison sans fil peut être de courte portée, de faible puissance via un lien RF, comme une liaison Bluetooth. Le module de clavier comprend également une source pour fournir de l'électricité pour l'exploitation du module de clavier, cette source comporte au moins une cellule solaire qui est utilisée seule ou en combinaison avec une batterie.

La demande internationale de brevet WO 97/42743 A1 décrit un téléphone (20) ayant un clavier (24) amovibles montés à distance. Le téléphone (20) est du type à avoir un combiné intégré (22) comprenant un écouteur (26), un embout (30), et un clavier (24) pour la composition de numéros. Le clavier (24) peut être détachée du combiné (22), de sorte que l'utilisateur puisse enfoncer les touches du clavier (24) sans avoir à retirer le combiné de son oreille. Lorsque le clavier est détaché du combiné, le clavier (24) de préférence, communique avec le combiné par le biais d'une connexion sans fil, telle que par l'intermédiaire d'un signal infrarouge. Le clavier peut inclure un transmetteur infrarouge pour la transmission d'un code bit unique de série en réponse à un utilisateur qui enfonce des touches du clavier. Le combiné (22) comprend un récepteur infrarouge et un téléphone à puce pour la réception et le décodage du signal transmis par le clavier (24).

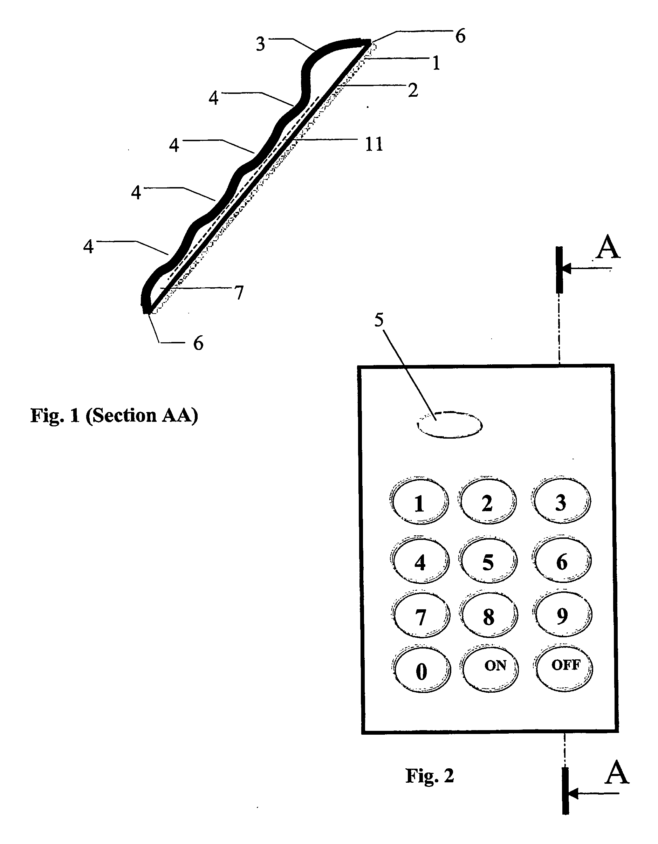

La demande de brevet du Royaume-Uni GB 2 313 734 A décrit une unité d'exploitation 200 contenant une section d'entrée ou clavier 201, pour saisir l'information comme le numéro de téléphone d'une personne appelée, qui est détachable du corps principal 100 du radiotéléphone. Le corps principal 100 comprend un transmetteur téléphonique consistant un haut-parleur 106, un microphone 107, et une section de transmission radio (101, 102, figure 2). La communication de données entre l'unité d'exploitation 200 et le corps principal 100 est réalisée par des bornes 111 et / ou des dispositifs à infrarouge.

La demande de brevet européen EP 0 685 954 A2 décrit un dispositif électronique, tel qu'un téléphone portable, comprenant un panneau frontal (1) dans lequel une pluralité de trous (10) est formé. Une touche bouton (3) est reçu dans chaque trou et peut se déplacer depuis l'extérieur du panneau frontal par l'application de pression. Un circuit électronique (5) portant un interrupteur respectif associé à chaque touche bouton est situé derrière le panneau frontal et un contact de chaque interrupteur est positionné pour être bougé par la touche bouton respective ce qui entraine une fermeture ou une ouverture de l'interrupteur. Une partie souple et étanche du clavier (2) s'étend sur tous les trous des boutons (10) entre les boutons touches et le circuit électronique (5), où le mouvement des ou d'un bouton touche est transmis à 1' interrupteur associé par l'intermédiaire de cette partie du clavier (2). Cette partie du clavier (2) est pressé par le circuit électronique (5)dans un engagement avec la face arrière du panneau frontal sur une zone annulaire s'étendant autour des trous des boutons touches où l'eau qui passe dans l'intérieur de l'appareil à travers les écarts entre les les boutons touches et les bords des trous du panneau frontal est positivement empêchée d'avoir accès au circuit électronique.

Le modèle allemand d'utilisation DE 29 618 043 U décrit un boîtier de téléphone qui est fabriqué avec un matériel doux, étanche(par exemple en silicone, caoutchouc, latex, et cetera). Le clavier qui est en dessous du boîtier peut être touché par pression d'une touche du boîtier. Les boutons qui sont en dessous du boîtier sont identifiés par puits. Ce système autorise par exemple, le port d'un téléphone portable à la ceinture ou dans la poche.

D'une manière plus générale, les boîtiers de télécommandes au sens large du thème, ne permettent pas d'associer des caractéristiques ; de réception de signaux, d'étanchéité, de déformation élastique et d'un mode de fixation autoadhésif, telles que nécessaires au contexte présenté.

Le clavier décrit ci-après permet à l'utilisateur, dans l'exemple donné, de protéger son portable en l'abritant, à l'intérieur de ses vêtements. Egalement pour des raisons de protection et selon l'exemple donné, un skieur est généralement coiffé d'un casque ou d'un bonnet, et porte une paire de lunettes ou un masque. Afin de communiquer l'utilisateur complétera l'équipement précité d'une oreillette et d'un microphone. Ce set oreillette/micro est relié, avec ou sans fil, au téléphone cellulaire portable qui est lui même relié, avec ou sans fil, à une interface d'émission/réception adaptée, voire exclusivement dédié au présent dispositif. Compte tenu de ce contexte, le clavier selon l'invention permet de remédier aux contraintes et aux inconvénients précités.

Ce clavier comporte en effet selon une première caractéristique, une enceinte étanche constituée de matériaux flexibles, souples et étanches assemblés entre eux par soudure, collage ou tout autres procédés garantissant l'étanchéité desdites jonctions. La notion d'étanchéité de ce clavier est, à titre d'exemple, préservée lors d'une immersion sous quatre ou cinq mètres d'eau. Cette enceinte de confinement est fixée sur une partie plane d'un ski, d'un snowboard ou sur tout autres supports, au moyen d'une substance adhésive. La partie de cette enceinte la plus largement au contact du support est appelée embase dans ce document. La partie de cette enceinte opposée à l'embase est appelée enveloppe dans ce document. La substance adhésive utilisée pour fixer le dispositif sur un support est déposée, lors de la fabrication du clavier, sur la face inférieure de l'embase. Ce mode de fixation est semblable à celui d'un autocollant il nécessite le retrait préalable d'une pellicule protectrice de la substance adhésive.

L'enveloppe est pourvue de zones prédéterminées qui, de par leurs formes ou de part les marques apposées, constituent les touches dudit clavier. Ces touches sont au minimum au nombre de douze, elles sont numérotées de zéro à neuf pour dix d'entre elles. Les deux touches restantes sont respectivement identifiées selon un code de marche/arrêt tel que, à titre d'exemple : on/off ou de couleur verte/rouge. Ces touches comportent des inscriptions alphabétiques et/ou des repères. Les dimensions, les formes, la transparence, la rétro luminescence du matériau constitutif ainsi que la disposition de ces touches sont adaptées à une pression digitale exercée par un utilisateur pouvant être ganté de gants épais. Chaque touche est d'une dimension importante dans le but de faciliter la lecture à distance des inscriptions portées sur ces touches comme dans celui de simplifier le bon positionnement du doigt de l'utilisateur. Une ou plusieurs zones de l'enveloppe sont transparentes ou translucides. Ces zones peuvent être réalisées en un matériau semi-rigide intégré à l'enveloppe ou en un matériau rigide apposé sur l'enveloppe.

Le volume interne de l'enceinte de confinement constituée entre l'embase et l'enveloppe est utilisé pour abriter et pour protéger les composants électriques et électroniques de ce clavier. Ces composants électriques et électroniques sont maintenus au moyen d'un mastic de fixation sur la partie supérieure de l'embase. Ces composants sont; une source d'énergie électrique du type batterie lithium ou du type pile électrochimique, une ou plusieurs diodes électroluminescentes, des conducteurs électriques ainsi qu'un module électronique d'émission et de réception dédié à une interface d'émission/réception reliée ou connectée à l'électronique d'un téléphone cellulaire portable. Les conducteurs électriques assurent les liaisons entre les parties du circuit électrique situées en regard des zones prédéterminées de l'enveloppe appelées touches et les composants internes précités ainsi qu'entre lesdits composants eux-mêmes. Une pression exercée sur l'une de ces touches a pour effet de modifier l'état électrique de la partie du conducteur électrique située en regard de la touche pressée et par la même l'état électrique du circuit électrique, donc celui des composants associés à ce circuit. Le module électronique d'émission et de réception est composé d'un circuit électronique comportant les circuits intégrés d'un émetteur et d'un récepteur d'ondes électromagnétiques appartenant au spectre des radiofréquences. Ce module électronique d'émission et de réception est calibré afin de générer des signaux d'une fréquence et d'une structure différente pour chaque touche du clavier pressée. L'électronique d'émission et de réception de ce module est calibrée pour générer ou capter des signaux sur une faible distance, de l'ordre de trois mètres et selon un angle d'émission et de réception sélectif ou multidirectionnel. Les axes et par la même les parties actives de ces transducteurs sont d'une orientation adaptée à la configuration d'utilisation et donc à la relation dans l'espace entre le support recevant ce clavier et l'emplacement, estimé préférentiel, de l'interface d'émission/réception associée au téléphone cellulaire portable de l'utilisateur. Les axes des transducteurs utilisés sont orientés sur les éléments d'émission/réception de l'interface précitée. D'une manière générale, sur l'utilisateur lorsque celui-ci presse les touches dudit clavier en se trouvant dans le sens conventionnel de lecture des inscriptions portées sur ces dernières. Ainsi, lorsque l'utilisateur presse ou affleure une touche sur le clavier en objet de l'invention, il emet des ondes radioélectriques spécifiques, qui, une fois traitées par l'électronique associée à l'interface de réception du téléphone cellulaire portable de l'utilisateur, permettent de commander ledit portable en lieu et place d'une action directe sur la touche de ce portable correspondante à celle pressée. L'utilisateur est informé d'un appel téléphonique au travers des fonctions sonores ou vibratoires de son portable mais également par l'éclairage d'une ou de plusieurs diodes électroluminescentes de signalisation situées dans l'enceinte du clavier en objet de l'invention. L'éclairage, éventuellement clignotant, de cette ou de ces diodes est déclenché par les signaux émis par l'électronique associée à l'interface d'émission dudit portable. Ces signaux sont alors captés par le transducteur intégré au module électronique de réception du clavier en objet de l'invention, puis traités par ce dernier afin d'établir le circuit électrique permettant d'alimenter cette ou ces diodes de signalisation d'un appel.

Le volume interne de l'enceinte de confinement est partiellement ou totalement comblé d'un compound à base d'une résine, d'un gel, d'un mastic ou d'un matériau alvéolaire. L'objectif de ce remplissage, partiel ou total, est de permettre une optimisation de l'élasticité d'ensemble de ce clavier. En effet, compte tenu du contexte de l'utilisation de ce clavier, il pourrait être amené à être recouvert de glace. Dans le cas d'une couche de glace de faible épaisseur cette dernière serait d'autant plus facile à fragmenter et donc à retirer, si elle est déposée sur un support souple et élastique au point d'être facilement déformable. A titre d'exemple, cette déformation peut être obtenue par une pression digitale exercée perpendiculairement à la face supérieure de l'enveloppe ou latéralement sur une partie du corps de ce clavier. L'élasticité de ce clavier sera donc optimisée lors de sa fabrication entre, d'une part, une enceinte souple comportant un volume interne remplit d'air, les épaisseurs et la structure de l'enveloppe assurant alors le maintien de celle-ci et d'autre part, un volume interne graduellement comblé par le compound précité en fonction de l'élasticité recherchée. Dans ce dernier cas l'enceinte, donc l'embase et/ou l'enveloppe ainsi que le volume interne, peut être partiellement ou totalement constituée par ledit compound. Toujours compte tenu de ce contexte les formes externes de l'enveloppe seront planes, arrondies, inclinées et d'une faible rugosité, dans le but de limiter les rétentions d'un liquide, notamment, de neige donc de glace potentielle. Les différentes formes de ce clavier et particulièrement celles de l'enveloppe, peuvent être moulées ou préformées. Les choix de conception retenus pour la réalisation de ce clavier, tel que, par exemple, le nombre et la dimension des points d'appuis, contribueront à l'optimisation de son amplitude élastique. Ce compound de remplissage est également utilisé pour compléter le maintien des composants électriques et électroniques précités voire pour assurer leurs fixations dans le cas d'une réalisation permettant de surmouler ces composants.

Selon des modes particuliers de réalisation :
- La substance adhésive qui permet la fixation du clavier en objet de l'invention sur un support peut être déposée sur une ou des parties de l'enveloppe en regard avec le support ou sur tout autres parties associées à l'enveloppe telle qu'un ruban adhésif.
- La fixation du clavier en objet de l'invention sur un support peut être complétée par une couture ou par une soudure reliant le support à des zones de l'embase et/ou de l'enveloppe.
- L'enceinte du clavier en objet de l'invention, donc l'embase et l'enveloppe ainsi que le volume interne et les composants associés à celui-ci, peuvent être majoritairement d'une très faible épaisseur. Cet ensemble se présente alors, pour grande partie, sous la forme d'un autocollant tel qu'utilisé lors de campagnes publicitaires.
- La source d'énergie électrique du clavier en objet de l'invention peut être, en partie ou en totalité, fournie par une cellule photovoltaïque solaire dont le capteur peut se situer sous une partie transparente de l'enveloppe. Ce capteur peut également se situer sur une face externe de l'enveloppe. Dans le cas ou cette source d'énergie serait complémentaire à une pile ou à une batterie, la liaison électrique avec le circuit électrique implanté dans l'enceinte serait réalisée au niveau des extrémités du circuit électrique connectées à ladite pile ou batterie. Dans le cas de liaisons extérieures à l'enceinte l'intégrité de l'étanchéité de cette enceinte serait préservée par une étanchéité à base de résine ou de mastic disposée dans la zone reliant ladite liaison à l'enceinte.
- La source d'énergie du clavier en objet de l'invention peut être située à l'extérieur de l'enceinte étanche précitée. Les extrémités des conducteurs du circuit électrique liées à la source électrique seraient en ce cas, elles aussi, situées à l'extérieur de l'enceinte. Afin de préserver l'intégrité de l'étanchéité de cette enceinte une résine ou un mastic serait disposé dans la zone reliant ladite liaison à l'enceinte.
- La diode électroluminescente de signalisation d'un appel téléphonique du clavier en objet de l'invention peut être située à l'extérieur de l'enceinte étanche. La liaison avec le volume interne de ladite enceinte serait alors étanchée au moyen d'une résine ou d'un mastic afin de préserver l'intégrité de l'étanchéité de cette enceinte.
- Dans le but de permettre une réalisation plus économique du clavier en objet de l'invention la ou les diodes électroluminescentes de signalisation utilisée pour informer l'utilisateur d'un appel téléphonique, ainsi que l'électronique associée à cette dernière, peuvent être supprimées.
- Dans le but de dédier d'une manière exclusive l'émission et/ou la réception des signaux traités par le module électronique du clavier en objet de l'invention, ce module et particulièrement les circuits intégrés le composant, peuvent être équipés de micro-programmateurs permettant le codage et le décodage des signaux échangés avec l'interface d'émission/réception associée au téléphone cellulaire portable de l'utilisateur. Ces micro-programmateurs peuvent être implantés dans l'enceinte de telle sorte que l'action de paramétrage de ces micro-programmateurs soit réalisable uniquement avant l'action de collage du clavier en objet de l'invention sur un support. L'embase peut en ce cas être pourvue localement d'une zone prédéterminée, de faible épaisseur ou susceptible de recevoir un écran, métallique par exemple et/ou un mastic d'étanchéité.
- Dans le but d'informer davantage l'utilisateur, la composition d'une numérotation déterminée sur le clavier en objet de l'invention peut alimenter un ensemble de diodes électroluminescentes dont l'éclairage de l'une ou de plusieurs de ces diodes permettrait d'informer l'utilisateur du niveau de réception du récepteur dudit clavier ou de celui de son téléphone cellulaire portable ou de l'état de la source électrique dudit clavier. Le circuit électronique de ce clavier serait pourvu des circuits intégrés adaptés à ces fonctions et plus particulièrement à la commande du nombre de diodes alimentées.
- Dans le but d'informer davantage l'utilisateur la composition d'une numérotation déterminée sur le clavier en objet de l'invention peut alimenter un afficheur alphanumérique à cristaux liquides qui serait implanté sous une partie transparente de l'enveloppe du clavier en objet de l'invention. Les signaux captés par le module d'émission et de réception dudit clavier seraient alors décodés par un circuit électronique pourvu de circuits intégrés adaptés à la commande de cet afficheur.
- Dans le but de promouvoir une marque, à titre d'exemple celle d'un opérateur téléphonique, la face supérieure de l'enveloppe du clavier en objet de l'invention peut comporter une ou des inscriptions représentatives de ladite marque.

En complément, la description du contexte de l'utilisation du clavier en objet de l'invention peut être représentée par une interface d'émission/réception, reliée ou connectée au téléphone cellulaire portable de l'utilisateur, composée de; une interface d'émission, une interface de réception et une interface de transfert. Cette dernière permet d'établir les liaisons électriques entre le circuit électronique du téléphone cellulaire portable et les informations électriques émises par les interfaces d'émission et de réception, précédemment citées. L'interface d'émission permet de générer un signal adapté au récepteur du clavier en objet de l'invention à partir des impulsions électriques provenant du téléphone portable via l'interface de transfert. L'interface de réception permet de générer, à partir des signaux émis par le clavier en objet de l'invention et via, l'interface de transfert, des impulsions électriques sur le téléphone portable. Ces interfaces, d'émission et de réception, peuvent être associées à l'interface de transfert ou être dissociées de celle-ci. Ces interfaces, d'émission et de réception peuvent être connectées à l'interface de transfert par une liaison électrique filaire ou reliées à celles-ci par une liaison dite sans fil.

Dans le cas d'une interface regroupant les fonctions émission/réception/transfert, celle-ci peut-être implantée à l'intérieur dudit téléphone cellulaire portable, connectée à celui-ci par un connecteur rigide ou par une liaison électrique filaire ou reliée à celui-ci par une liaison dite sans fil.

En complément, la description du contexte de l'utilisation du clavier en objet de l'invention peut être représentée par le microphone ainsi que le ou les hauts parleurs permettant une communication au moyen du téléphone cellulaire portable de l'utilisateur. Ces composants peuvent être sous la forme d'un set oreillette, d'un casque d'écoute, d'un micro de veste. Ces composants peuvent être intégrés au casque de protection de l'utilisateur ou à l'habitacle d'un véhicule. La liaison entre ces composants audio et ledit téléphone cellulaire est du type filaire ou sans fil.

Les dessins annexés illustrent l'invention :
La figure 1 représente selon une section AA, le dispositif de l'invention.
La figure 2 représente selon une vue de dessus de l'invention (arrêtes fictives non représentées).
La figure 3 représente selon une section AA une variante du dispositif de l'invention.
La figure 4 représente selon une vue écorchée le dispositif de l'invention.
La figure 5 représente le schéma électrique l'invention.

Le dispositif en objet de l'invention est particulièrement destiné à être utilisé par un skieur. Toutefois, ce clavier peut être avantageusement employé dans les situations où un individu ganté évolue dans un environnement ne permettant pas une manipulation aisée d'un téléphone cellulaire portable, tout en ayant le besoin ou le loisir, de communiquer au moyen dudit portable. Le support dudit clavier est en ce cas diversifiés Ce peut être, à titre d'exemple, le dessus du réservoir d'essence d'une moto pour un motard ou l'entre jambe d'un pantalon au niveau de la cuisse pour un pompier. En regard des actions de base nécessaires à une communication téléphonique et compte tenu de l'aspect pratique comme du faible coût du clavier en objet de l'invention, celui-ci peut-être d'une application plus largement diversifiée. A titre d'exemple, ce clavier, une fois apposé sur le tableau de bord d'une automobile ou sur celui d'un scooter, simplifie et sécurise la saisie des touches.

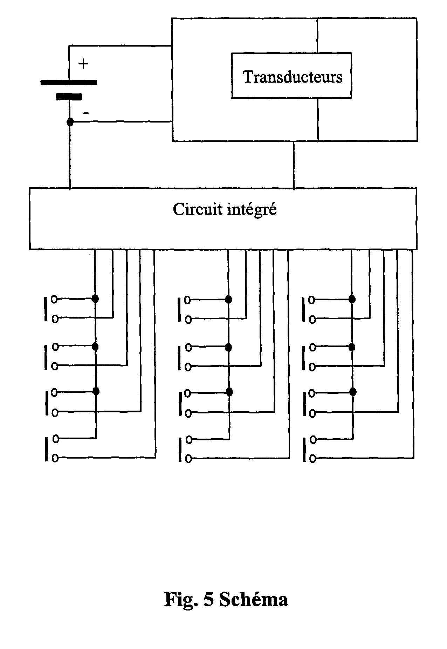

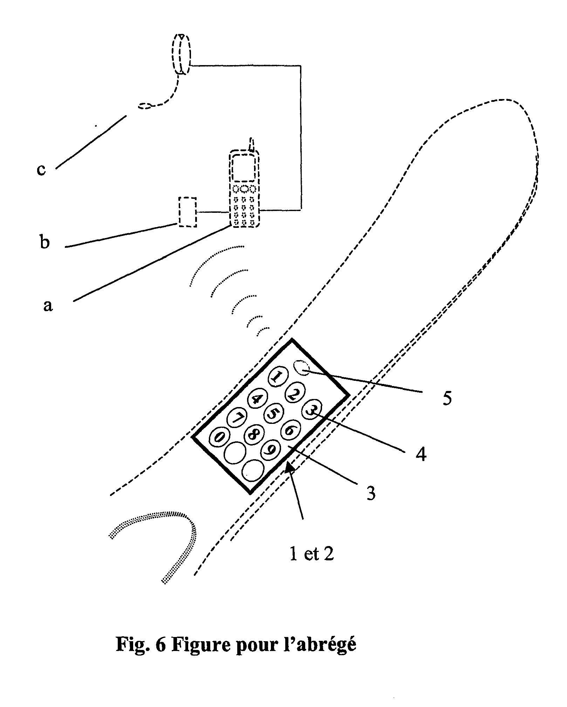

En référence des dessins et selon un mode de réalisation, non limitatif, correspondant au figures 1, 2, 4 et 5, le dispositif comporte une substance adhésive (1), à titre d'exemple un adhésif double face, déposée sur l'une des faces d'une embase flexible (2), réalisée à titre d'exemple par une plaque rectangulaire de faible épaisseur de matière plastique. Cette embase flexible (2) est recouverte, sur sa face opposée à celle contenant la substance adhésive, d'une enveloppe (3), réalisée en un matériau souple, à titre d'exemple, un matériau à base de caoutchouc.

Cette enveloppe (3) comporte, sur sa face extérieure, des inscriptions alphanumériques, dans des zones de mêmes dimensions, appelées touches (4) et dont le nombre est à titre d'exemple de douze. Pour dix de ces touches (4) il est inscrit sur chacune d'elle un chiffre de zéro à neuf. Pour deux de ces touches (4) il est inscrit à titre d'exemple « ON » sur l'une et « OFF » sur l'autre. Les dimensions de ces touches (4) sont compatibles avec le fait d'être pressées par un utilisateur pouvant être ganté de gants épais. Selon ce mode de réalisation, ces touches (4) sont disposées à équidistance les unes des autres. Cette enveloppe comporte également une zone translucide (5) réalisée selon ce mode de réalisation, dans la masse du matériau de l'enveloppe (3) et située dans une zone à l'écart de la zone des touches (4). La surface extérieure de cette enveloppe (3) est d'une faible rugosité et elle est composée de formes arrondies.

Cette enveloppe (3) est, dans ses épaisseurs comme dans ses formes, structurée de manière à permettre, une fois cette dernière posée sur l'embase (2), l'obtention d'espaces vides entre sa face intérieure et l'embase (2). Cette enveloppe (3) est à titre d'exemple obtenue par moulage. Selon ce mode de réalisation la jonction (6) permettant d'associer l'enveloppe (3) à l'embase (2) est assurée par un collage périphérique à l'embase (2). Cet ensemble embase (2) et enveloppe (3) constitue une enceinte de confinement étanche ayant pour volume intérieur (7) les espaces laissés vides entre l'embase (2) et l'enveloppe (3).

Préalablement au collage de l'enveloppe (3) sur l'embase (2) les composants internes de ce dispositif sont fixés sur la face de l'embase (2), opposée à celle pourvue de la substance adhésive (1), au moyen d'un mastic de fixation. L'implantation de ces composants sur l'embase (2) est en correspondance avec les espaces vides précités. Selon ce mode de réalisation, ces composants internes sont composés d'un module électronique (8) émetteur et récepteur d'ondes radioélectriques, d'une batterie au lithium (10) de faible épaisseur et d'un circuit de conducteurs électriques (11) composé par un film souple. Selon ce mode de réalisation le module électronique (8) est composé d'un circuits intégré, des transducteurs d'émission/réception et d'une diode électroluminescente (9). Cette diode est implantée sous la zone translucide (5) de l'enveloppe (3).

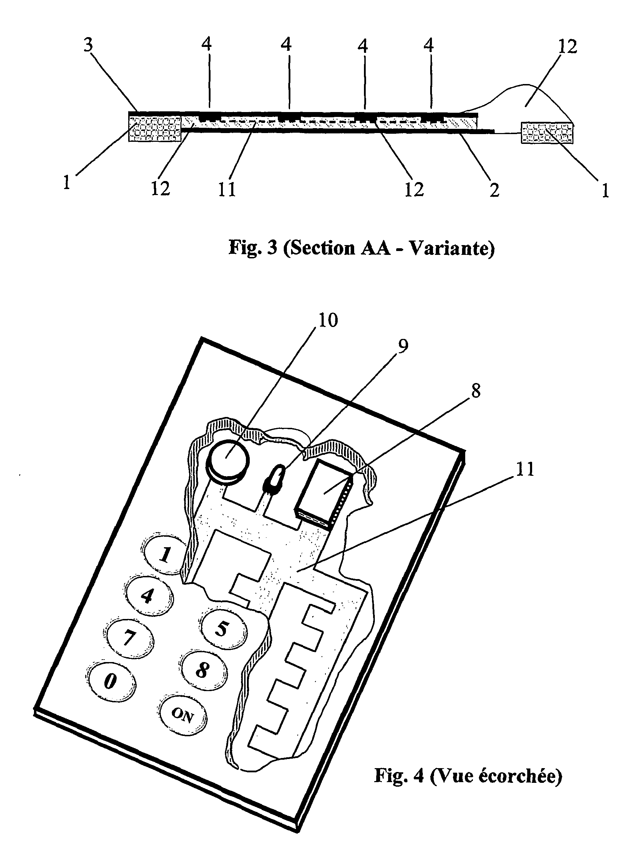

La figures 3 représente une variant d'un mode de réalisation, non limitatif, de la structure de ce clavier, la substance adhésive (1) est pour partie déposée sur une partie de l'enveloppe (3) en regard avec le support de fixation dudit dispositif. Le volume (7) est diversement comblé, il est pour partie rempli d'un compound (12) sous forme de résine permettant de solidariser l'enveloppe (3) à l'embase (2) en prenant en sandwich une partie du circuit électrique (11), il est pour partie rempli d'un compound (12) sous forme de pastille d'une mousse alvéolaire en regard de chaque touche et il est pour partie composé d'un compound (12) sous forme de mastic à base d'élastomères dans la zone d'implantation du module électronique (8) comportant la diode électroluminescente (9), de la batterie (10) et de la partie restante du circuit électrique (11). Le compound (12) constitué d'un mastic d'élastomères assure, par la même partiellement, les fonctions d'embase (2) comme d'enveloppe (3). Selon cette variante de réalisation les points de fixation du dispositif sur un support, donc les zones de collage (1), permettent d'écarter l'embase (2) dudit support dans le but d'optimiser la déformation élastique de l'ensemble du dispositif.

## Revendications

1. Dispositif pour permettre d'effectuer à distance les actions nécessaires à l'émission ou à la réception d'une communication téléphonique au moyen d'un téléphone cellulaire portable **caractérisé par le fait qu'**il comporte une substance adhésive (1) déposée sur la face inférieure d'une embase flexible (2) dont la face supérieure est recouverte d'une enveloppe souple (3) qui comporte, sur sa face externe, des zones prédéterminées de grosses dimensions appelées touches (4) ainsi qu'une ou plusieurs zones translucides ou transparentes (5) et dont la ou les liaisons (6) avec l'embase flexible (2) permettent d'obtenir une enceinte étanche de confinement du volume (7) ainsi créé entre l'embase (2) et l'enveloppe (3) et à l'intérieur duquel sont positionnés un module électronique (8) d'émission et de réception d'ondes électromagnétiques appartenant au spectre des radiofréquences ainsi q'une ou plusieurs diodes électroluminescentes (9).

2. Dispositif selon la revendication 1 **caractérisé en ce** les signaux radioélectriques émis ou reçus par le module électronique (8) sont dédiés, d'une manière exclusive par le fait d'un codage ou d'une manière non exclusive, à l'interface d'émission/réception reliée ou connectée au téléphone cellulaire portable de l'utilisateur.

3. Dispositif selon la revendication 1 et la revendication 2 **caractérisé en ce que** chaque touche (4) pressée génère, via le circuit électrique (11), la source d'énergie (10) et le module électronique (8), des signaux radioélectriques d'une fréquence et d'une structure différente.

4. Dispositif selon la revendication 1 et la revendication 2 **caractérisé en ce que** pour une suite de touches (4) pressées ou pour un signal radioélectrique capté par le module électronique (8), ledit module (8) permet d'établir un circuit électrique (11) en mesure d'alimenter par l'intermédiaire d'une source d'énergie électrique (10) des récepteurs tels q'une ou plusieurs diodes électroluminescentes de signalisation ou un afficheur alphanumérique à cristaux liquides.

5. Dispositif selon l'une quelconque des revendications précédentes **caractérisé en ce que** l'embase (2), l'enveloppe (3) ainsi que le volume (7) sont, tout ou partiellement, constitués d'un compound (12) à base d'une résine, d'un gel, d'un mastic ou d'un matériau alvéolaire, dans le but, de permettre une optimisation de élasticité d'ensemble du dispositif par remplissage du volume (7), comme dans celui d'assurer le maintien, la protection et l'étanchéité des composants internes (8, 9, 10, 11).

6. Dispositif selon l'une quelconque des revendications précédentes **caractérisé en ce que** les zones prédéterminées appelées touches (4) sont adaptées à une pression digitale exercée par un utilisateur ganté de gants épais, elles sont au minimum au nombre de douze dont dix sont numérotées de zéro à neuf, cette inscription numérique est éventuellement complétée de repères alphabétiques et deux de ces touches sont respectivement identifiées selon un code de marche/arrêt.

7. Dispositif selon l'une quelconque des revendications précédentes **caractérisé en ce que** la substance adhésive (1) est située sur des parties de l'enveloppe (3) en regard avec le support sur lequel est apposée l'embase (2) ou sur toutes autres parties associées à l'enveloppe (3) telle qu'un ruban adhésif.

8. Dispositif selon l'une quelconque des revendications précédentes **caractérisé en ce que** la fixation du dispositif sur un support est complétée par une couture ou par une soudure, reliant le support à l'embase (2) et/ou à l'enveloppe (3).

9. Dispositif selon l'une quelconque des revendications précédentes **caractérisé en ce que** la source d'énergie électrique (10) est, tout ou en partie, produite par une cellule photovoltaïque solaire dont le capteur est situé sous une partie transparente (5) de l'enveloppe (3) ou sur la face externe de cette enveloppe (3).

10. Dispositif selon l'une quelconque des revendications précédentes **caractérisé en ce que** la source d'énergie électrique (10) et les extrémités des conducteurs du circuit électrique (11) liées à la source électrique (10) sont situées à l'extérieur de l'enceinte délimitant le volume (7).

## Claims

1. Device to allow the actions necessary for sending or receiving a telephone communication by means of a portable cellular telephone to be carried out remotely, **characterised by** the fact that it has an adhesive substance (1) applied to the bottom face of a flexible base (2), the top face of which is covered by a flexible envelope (3), which on its external face has large-size predetermined areas called keys (4) and one or several translucent or transparent areas (5), the connection or connections (6) of which with the flexible base (2) allow a sealed enclosure to be obtained for containment of the volume (7), which is created in this way between the base (2) and the envelope (3) and inside which are positioned an electronic module (8) for sending and receiving electromagnetic waves belonging to the radio frequency spectrum and one or several electroluminescent diodes (9).

2. Device according to claim 1, **characterised in that** the radio electric signals sent or received by the electronic module (8) are dedicated, exclusively by coding or non-exclusively, to the sending/receiving interface, which is linked or connected to the portable cellular telephone of the user.

3. Device according to claim 1 and claim 2, **characterised in that** each key (4) pressed generates radio electric signals of a different frequency and structure via the electric circuit (11), source of power (10) and electronic module (8).

4. Device according to claim 1 and claim 2, **characterised in that** for a series of keys (4) pressed or for a radio electric signal sensed by the electronic module (8), this module (8) allows an electric circuit (11) to be established so as to supply receivers, such as one or several electroluminescent signalling diodes or a liquid crystal alphanumeric display, by means of a source of electric power (10).

5. Device according to any one of the previous claims, **characterised in that** the base (2), envelope (3) and volume (7) are made completely or partly of a compound (12), which is based on a resin, gel or mastic, or a cellular material for the purpose of allowing optimisation of the elasticity of the whole of the device by filling the volume (7) and for the purpose of ensuring maintenance, protection and sealing of the internal components (8, 9, 10, 11).

6. Device according to any one of the previous claims, **characterised in that** the predetermined areas called keys (4) are adapted to finger pressure exerted by a user wearing thick gloves, there are at least twelve of them, ten of which are numbered from zero to nine, this numerical inscription may be completed by alphabetic marks and two of these keys are identified by a start/stop code respectively.

7. Device according to any one of the previous claims, **characterised in that** the adhesive substance (1) is located on parts of the envelope (3) opposite the support, on which the base (2) is set, or on all other parts associated with the envelope (3), such as an adhesive tape.

8. Device according to any one of the previous claims, **characterised in that** the fixing of the device on a support is completed by a stitch or soldered seam, connecting the support to the base (2) and/or the envelope (3).

9. Device according to any one of the previous claims, **characterised in that** the source of electric power (10) is produced completely or partly by a solar photovoltaic cell, the sensor of which is located under a transparent part (5) of the envelope (3) or on the external face of this envelope (3).

10. Device according to any one of the previous claims, **characterised in that** the source of electric power (10) and the ends of the conductors of the electric circuit (11), which are connected to the source of electric power (10), are located outside the enclosure delimiting the volume (7).

## Patentansprüche

1. Vorrichtung, welche eine Ferndurchführung der für das Senden oder das Empfangen einer Telefonverbindung mittels eines Mobiltelefons erforderlichen Aktionen erlaubt, **dadurch gekennzeichnet, dass** sie einen Klebstoff (1) umfasst, welcher auf der Unterseite einer flexiblen Halterung (2) angebracht ist, deren Oberseite von einer dünnen Hülle (3) überzogen ist, welche auf ihrer Aussenfläche vorbestimmte Zonen grossen Ausmasses, Tasten (4) genannt, sowie eine oder mehrere lichtdurchlässige oder transparente (5) Zonen umfasst, und deren Verbindung oder Verbindungen (6) mit der flexiblen Halterung (2) eine dichte Ummantelung zur Isolierung des auf diese Weise zwischen der Halterung (2) und der Hülle (3) geschaffenen Volumens (7) erlaubt, und in deren Innenraum ein elektronisches Modul (8) zum Senden und Empfangen elektromagnetischer, zum Radiofrequenzbereich gehörenden Wellen sowie eine oder mehrere Leuchtdioden (9) angeordnet sind.

2. Vorrichtung nach Anspruch 1, **dadurch gekennzeichnet, dass** die vom elektronischen Modul (8) gesendeten oder empfangenen Funksignale auf eine exklusive Weise durch eine Kodierung oder auf eine nichtexklusive Weise an die Sende/Empfangschnittstelle, welche am bzw. mit dem Mobiltelefon des Benutzers angebunden bzw. verbunden ist, gerichtet sind.

3. Vorrichtung nach Anspruch 1 und 2, **dadurch gekennzeichnet, dass** jede gedrückte Taste (4) über den Stromkreis (11), der Energiequelle (10) und das elektronische Modul (8) Funksignale mit einer unterschiedlichen Frequenz und Struktur generiert.

4. Vorrichtung nach Anspruch 1 und 2, **dadurch gekennzeichnet, dass** das Modul (8) für eine Folge von gedrückten Tasten (4) oder für ein vom elektronischen Modul (8) empfangenes Funksignal die Herstellung eines Stromkreises (11), welcher mittels einer elektrischen Energiequelle (10) die Stromversorgung von Empfängern, wie z.B. eine oder mehrere Leuchtdioden zur Signalisierung oder eine Flüssigkristall-Digitalanzeige, erlaubt.

5. Vorrichtung nach einem der vorangehenden Ansprüche, **dadurch gekennzeichnet, dass** die Halterung (2), die Hülle (3) sowie das Volumen (7) gesamtheitlich oder teilweise aus einer Zusammensetzung (12) auf Basis eines Harzes, eines Gels, eines Kitts oder eines wabenförmiges Material besteht, mit dem Ziel, eine Elastizitätsoptimierung des Ensemble aus der Vorrichtung zur Füllung des Volumens (7) zu erlauben, sowie mit dem Ziel, die Erhaltung, den Schutz und die Dichtheit der internen Komponenten (8, 9, 10, 11) zu gewährleisten.

6. Vorrichtung nach einem der vorangehenden Ansprüche, **dadurch gekennzeichnet, dass** die vorbestimmten Zonen, Tasten (4) genannt, zur Ausübung eines Fingerdrucks von einem behandschuhten Benutzer mit dicken Handschuhen ausgestaltet sind, wobei sie mindestens zwölf an der Zahl sind, wovon zehn von Null bis neun durchnummeriert sind, wobei diese numerische Beschriftung eventuell mit alphabetischen Markierungen ergänzt ist und zwei dieser Tasten jeweils durch einen Start/Stop Code erkannt werden.

7. Vorrichtung nach einem der vorangehenden Ansprüche, **dadurch gekennzeichnet, dass** der Klebstoff (1) auf Teilen der Hülle (3) bezogen auf dem Träger, auf dem die Halterung (2) sitzt, angeordnet ist oder auf allen anderen der Hülle (3) zugeordneten Teilen, wie zum Beispiel auf einem Klebeband.

8. Vorrichtung nach einem der vorangehenden Ansprüche, **dadurch gekennzeichnet, dass** die Fixierung der Vorrichtung auf einem Träger mit einer Naht oder einer Lötnaht, welche den Träger mit der Halterung (2) und/oder mit der Hülle (3) verbindet, ergänzt ist.

9. Vorrichtung nach einem der vorangehenden Ansprüche, **dadurch gekennzeichnet, dass** die elektrische Energiequelle (10) ganzheitlich oder zum Teil mittels einer photovoltaischen Solarzelle bereitgestellt wird, deren Sensor unter einem transparenten Teil (5) der Hülle (3) oder auf der Aussenfläche dieser Hülle (3) angeordnet ist.

10. Vorrichtung nach einem der vorangehenden Ansprüche, **dadurch gekennzeichnet, dass** die elektrische Energiequelle (10) und die an der elektrischen Quelle (10) angebundenen Extremitäten der Leiter des Stromkreises (11) ausserhalb der das Volumen (7) begrenzende Ummantelung angeordnet sind.
